# EUROPEAN PATENT SPECIFICATION

(11) **EP 3 392 510 B1**
(45) Date of publication and mention of the grant of the patent: **08.01.2020**
(21) Application number: 17741458.8
(22) Date of filing: 19.01.2017
(51) Int. Cl.: F04D 29/44, F16L 43/00, F16L 55/00, F04D 29/42

(54) **PIPING FOR DRIVEN-TYPE FLUID MACHINE**
LEITUNGSSYSTEM FÜR ANGETRIEBENE FLUIDMASCHINE
TUYAUTERIE POUR MACHINE À FLUIDE DU TYPE ENTRAÎNÉ

(30) Priority: 22.01.2016 JP 2016010522
(43) Date of publication of application: 24.10.2018
(73) Proprietor: Mitsubishi Heavy Industries Compressor Corporation, Minato-ku Tokyo 108-0014 (JP)
(72) Inventor: NAKANIWA, Akihiro, Tokyo 108-8215 (JP); TASAKI, Akinori, Hiroshima-shi Hiroshima 733-8553 (JP)
(74) Representative: Studio Torta S.p.A.
(86) International application number: PCT/JP2017/001663
(87) International publication number: WO 2017/126581

(56) References cited:
- EP-A1- 2 960 527
- DE-A1-102014 212 909
- JP-A- S5 161 019
- JP-A- S6 429 693
- JP-U- H0 564 510
- US-A1- 2012 216 528
- US-A1- 2013 112 298
- DATABASE WPI Week 201547 Thomson Scientific, London, GB; AN 2015-39916E XP002786444, -& CN 104 564 452 A (CAO L) 29 April 2015 (2015-04-29)

## Description

### TECHNICAL FIELD

The present invention relates to a pipe for a driven-type fluid machine and is a pipe devised to enable space-saving.

### BACKGROUND ART

Petrochemical, chemical, air separation plants and other plants use many centrifugal compressors. One type of such centrifugal compressors is a single-shaft multi-stage centrifugal compressor. The single-shaft multi-stage centrifugal compressor includes a plurality of impellers on a single shaft at a plurality of stages along the axial direction and compresses a fluid in a stepwise manner.

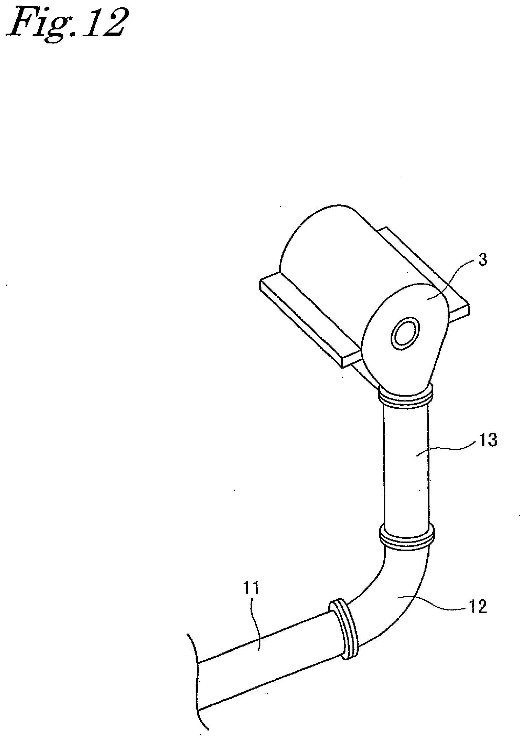

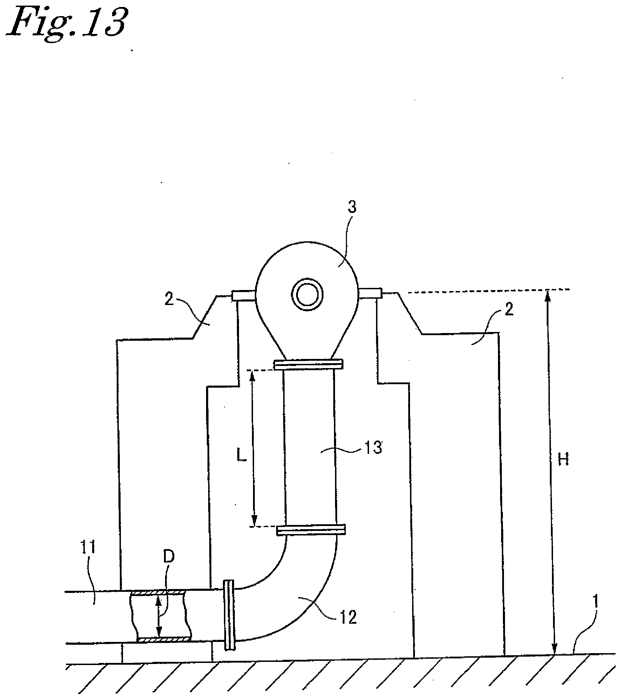

Now, an example of the disposed state of a single-shaft multi-stage centrifugal compressor with a pipe that supplies a fluid thereto will be described with reference to Fig. 12 being a schematic perspective view and Fig. 13 being a disposition-construction view.

As illustrated in both figures, a single-shaft multi-stage centrifugal compressor 3 is supported by a mount 2 installed on a base (ground) 1. In other words, the single-shaft multi-stage centrifugal compressor 3 is placed above the base (ground) 1 as viewed from it. A fluid is supplied to this single-shaft multi-stage centrifugal compressor 3 through a supply pipe 11 disposed horizontally along the base 1, a bend (bent pipe) 12, and an inlet pipe 13 disposed vertically. These supply pipe 11, bend 12, and inlet pipe 13 are circular pipes (tubular members whose cross-sectional shapes perpendicular to the tube axis are circular). Note that the inlet pipe 13 is a pipe connected to a suction port provided in a casing of the single-shaft multi-stage centrifugal compressor 3 and extends vertically downward as viewed from the casing.

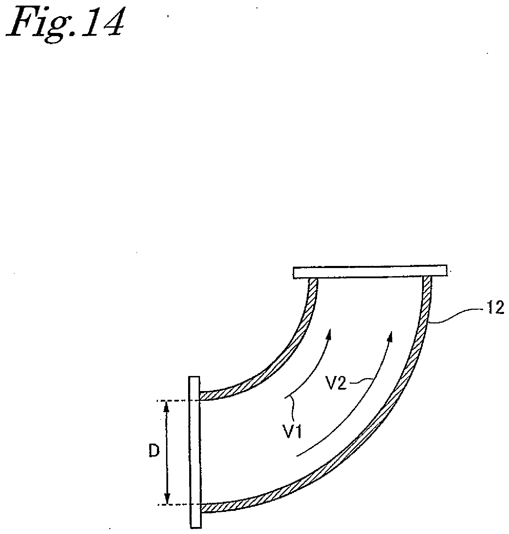

The fluid supplied through the supply pipe 11 bends the direction of travel by 90° at the bend 12 and then flows through the inlet pipe 13. Since the fluid flows through the bend 12 while bending, a flow speed V1 on an inner periphery side of the bend 12 and a flow speed V2 on an outer periphery side of the bend 12 are different from each other, as illustrated in Fig. 14. Thus, swirling and separation occur, thereby disturbing the flow of the fluid. As this turbulent fluid with the swirling and the like flows through the straight inlet pipe 13, the swirling and the like weaken. Consequently, the fluid is sucked into the single-shaft multi-stage centrifugal compressor 3 in a state where its flow speed is made substantially uniform. In other words, the fluid is sucked into the single-shaft multi-stage centrifugal compressor 3 in a state where its flow is made uniform at the inlet of the compressor.

As mentioned above, the inlet pipe 13 is provided to weaken the swirling and the like caused by flows through the bend 12. To achieve such an effect, the axial length of the inlet pipe 13 is usually (conventionally) set to satisfy L ≥ 3D, where D is the diameter (inside diameter) of the supply pipe 11 and L is the axial length of the inlet pipe 13.

Note that, if the axial length of the inlet pipe 13 is insufficient, the turbulent fluid with the swirling and the like will be sucked into the single-shaft multi-stage centrifugal compressor 3. This will lower the performance of the compressor and also reduce the operation range. For this reason, the axial length of the inlet pipe 13 must not be insufficient.

### PRIOR ART DOCUMENT

### PATENT DOCUMENT

Patent Document 1: Japanese Patent Application Publication No. 2010-71140
Patent Document 2: CN 104 564 452 A
Patent Document 3:DE 10 2014 212909;
Patent Document 4:US 2013/112298.

### SUMMARY OF THE INVENTION

### PROBLEMS TO BE SOLVED BY THE INVENTION

As mentioned above, in order to supply the fluid to the single-shaft multi-stage centrifugal compressor 3 after its flow speed is made substantially uniform, the inlet pipe 13 with a long axial length has been conventionally used. This requires for the mount 2 to be tall and leads to a problem that a disposition height H of the single-shaft multi-stage centrifugal compressor 3 is high. There is also a disadvantage that accompanying structural components have to be large.

The above example has been described about a single-shaft multi-stage centrifugal compressor. However, the problem of an inlet pipe's long axial length exists also in the case of supplying a fluid to a driven-type fluid machine such as a compressor, a pump, or an air blower, which converts mechanical work into fluid-dynamic energy, through a supply pipe, a bend, and an inlet pipe.

In view of the above conventional technique, the present invention is characterized by providing a pipe for a driven-type fluid machine devised to be capable of reliably reducing turbulence in a fluid and also shortening the axial length of an inlet pipe, thus allowing space-saving, by devising the shape of the pipe for the driven-type fluid machine.

### MEANS FOR SOLVING THE PROBLEMS

The present invention for solving the above-described problem is a pipe for a driven-type fluid machine, the pipe including an inlet pipe that is to be connected to a suction port provided in a casing of the driven-type fluid machine, a supply pipe that supplies a fluid, and a bend that connects the supply pipe and the inlet pipe to each other, characterized in that the bend is shaped such that a pipe width in a plane including a pipe axis of the inlet pipe and a pipe axis of the supply pipe gradually decreases from an upstream portion to a bent portion.

Also, the present invention is characterized in that the bend is shaped such that a pipe width in a plane being perpendicular to the plane including the pipe axis of the inlet pipe and the pipe axis of the supply pipe and including the pipe axis of the inlet pipe gradually increases from the upstream portion to the bent portion.

Also, the present invention is characterized in that a pipe cross-sectional area of the bend remains constant from the upstream portion to the bent portion.

Also, the present invention is characterized in that inside the bend, a plate-shaped flow straightening member is disposed which is disposed along a direction of flow of the fluid to guide the fluid.

Also, the present invention is characterized in that
the driven-type fluid machine is a single-shaft multi-stage centrifugal compressor,
the inlet pipe is disposed vertically, and
the supply pipe is disposed horizontally.

### EFFECT OF THE INVENTION

According to the present invention, the bend portion is shaped such that the pipe width in the plane including the pipe axis of the inlet pipe and the pipe axis of the supply pipe gradually decreases from the upstream portion to the bent portion. This reduces turbulence such as swirling occurring at the bent portion. Accordingly, the length of the inlet pipe can be shortened. Hence, space-saving can be achieved.

### BRIEF DESCRIPTION OF THE DRAWINGS

[Fig. 1] Fig. 1 is a schematic perspective view illustrating an example of the disposed state of a pipe according to embodiment 1 of the present invention.
[Fig. 2] Fig. 2 is a construction view illustrating the example of the disposed state of the pipe according to embodiment 1 of the present invention.
[Fig. 3] Fig. 3 is a cross-sectional view illustrating a bend used in embodiment 1.
[Fig. 4] Fig. 4 is a cross-sectional view taken along line IV-IV in Fig. 3.
[Fig. 5] Fig. 5 is a cross-sectional view taken along line V-V in Fig. 3.
[Fig. 6] Fig. 6 is a cross-sectional view taken along line VI-VI in Fig. 3.
[Fig. 7] Fig. 7 is a cross-sectional view taken along line VII-VII in Fig. 3.
[Fig. 8] Fig. 8 is a cross-sectional view taken along line VIII-VIII in Fig. 2.
[Fig. 9] Fig. 9 is a cross-sectional view illustrating an example of a bend as embodiment 2 of the present invention.
[Fig. 10] Fig. 10 is a cross-sectional view illustrating another example of the bend as embodiment 2 of the present invention.
[Fig. 11] Fig. 11 is a cross-sectional view taken along line XI-XI in Fig. 10.
[Fig. 12] Fig. 12 is a schematic perspective view illustrating an example of the disposed state of a pipe according to a conventional technique.
[Fig. 13] Fig. 13 is a construction view illustrating the example of the disposed state of the pipe according to the conventional technique.
[Fig. 14] Fig. 14 is a cross-sectional view illustrating a conventional bend.

### MODES FOR CARRYING OUT THE INVENTION

Now, a pipe for a driven-type fluid machine according to the present invention will be described in detail based on embodiments.

### EMBODIMENT 1

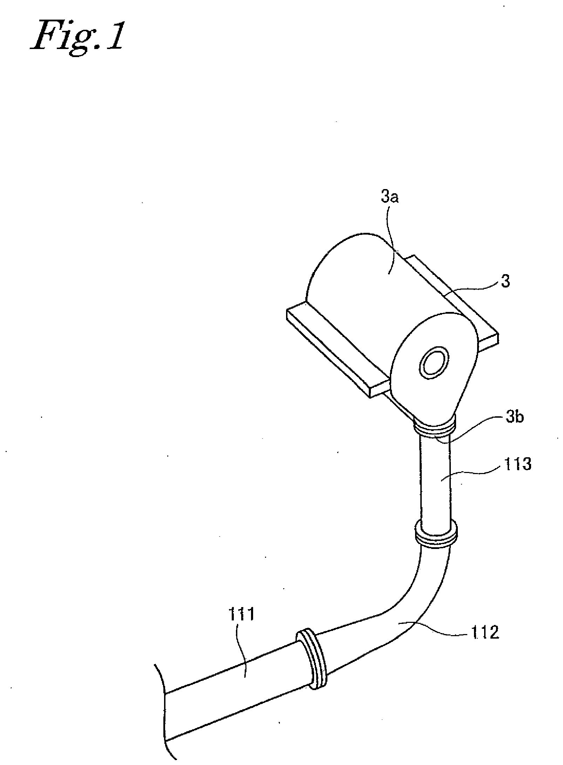

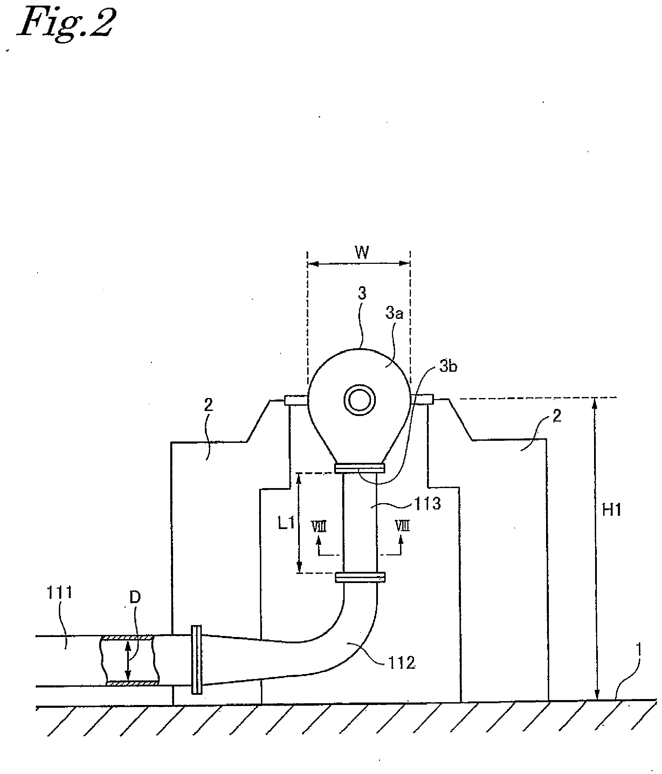

In embodiment 1, an example where a single-shaft multi-stage centrifugal compressor is employed as the driven-type fluid machine will be discussed. Fig. 1 is a schematic perspective view illustrating an example of a disposed state, and Fig. 2 is a disposition-construction view.

As illustrated in both figures, a single-shaft multi-stage centrifugal compressor 3 is supported by a mount 2 installed on a base (ground) 1. In other words, the single-shaft multi-stage centrifugal compressor 3 is placed above the base (ground) 1 as viewed from it.

A fluid is supplied to the single-shaft multi-stage centrifugal compressor 3 through a supply pipe 111 disposed horizontally along the base 1, a bend (bent pipe) 112, and an inlet pipe 113 being a straight pipe disposed vertically.

The inlet pipe 113 is a pipe connected to a suction port 3b provided in a casing 3a of the single-shaft multi-stage centrifugal compressor 3 and extends vertically downward as viewed from the casing 3a. The supply pipe 111 and the inlet pipe 113 are connected by the bend 112, and the fluid supplied through the supply pipe 111 bends the direction of travel by 90° at the bend 112 and then flows through the inlet pipe 113. The fluid is then sucked into the single-shaft multi-stage centrifugal compressor 3.

The pipe shape of the supply pipe 111 is similar to the conventional one, or a circular pipe (a tubular member whose cross-sectional shape perpendicular to the tube axis is circular) . However, the pipe shapes of the bend 112 and the inlet pipe 113 are different from the conventional one.

First, planes necessary to specify the shapes of the bend 112 and the inlet pipe 113 will be described.
(1) A vertical cross-sectional plane in this example is a plane including the pipe axis of the vertically disposed inlet pipe 113 and the pipe axis of the horizontally disposed supply pipe 111.
(2) A horizontal cross-sectional plane in this example is a plane being perpendicular to the plane including the pipe axis of the vertically disposed inlet pipe 113 and the pipe axis of the horizontally disposed supply pipe 111 (vertical cross-sectional plane) and including the pipe axis of the supply pipe 111.

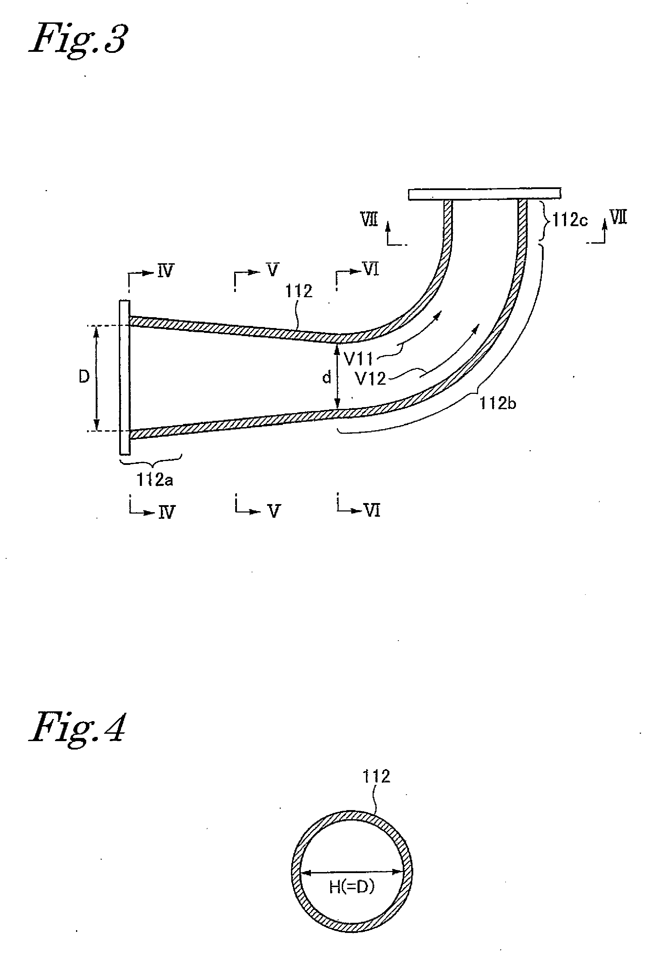

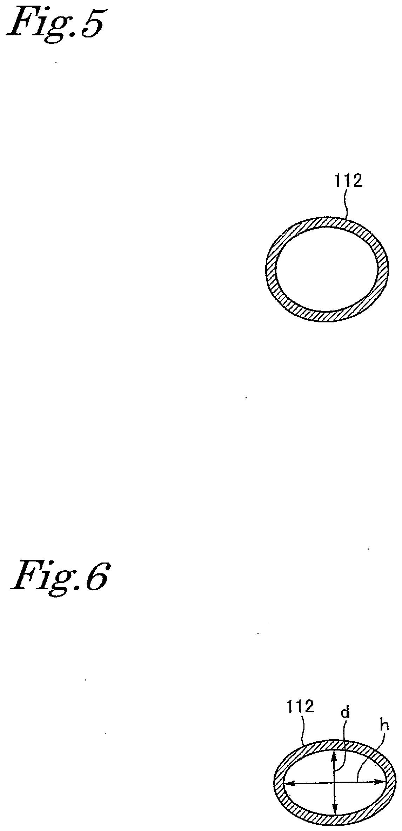

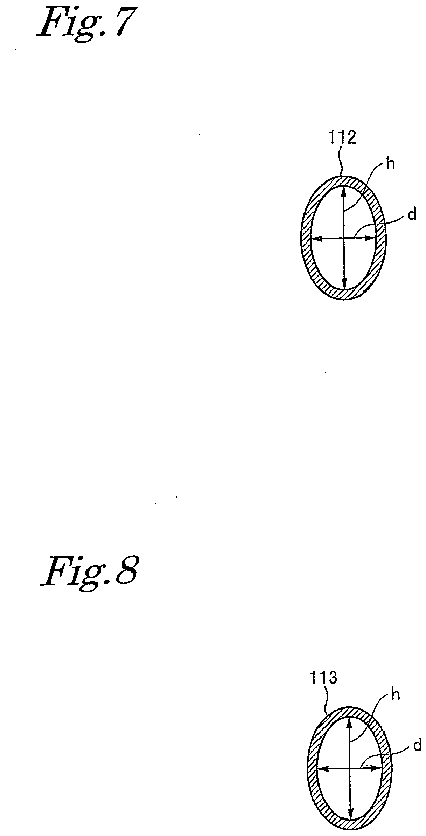

The shape of the bend 112 will be described with reference to Fig. 3 to Fig. 7 as well as Fig. 1 and Fig. 2. Fig. 3 is a cross-sectional view of the bend 112 taken along the vertical cross-sectional plane, Fig. 4 is a cross-sectional view taken along line IV-IV in Fig. 3, Fig. 5 is a cross-sectional view taken along line V-V in Fig. 3, Fig. 6 is a cross-sectional view taken along line VI-VI in Fig. 3, and Fig. 7 is a cross-sectional view taken along line VII-VII in Fig. 3.

As illustrated in Fig. 3, in the bend 112, a portion connected to the supply pipe 111 is an upstream portion 112a, a portion bending by 90° from the horizontal direction and extending vertically upward is a bent portion 112b, and a portion connected to the inlet pipe 113 is a downstream portion 112c.
(1) The pipe width of the bend 112 in the vertical cross-sectional plane gradually decreases from D to d from the upstream portion 112a to the bent portion 112b (see Fig. 3).
(2) The pipe width of the bend 112 in pipe width in the horizontal cross-sectional plane gradually increases from H (= D) to h from the upstream portion 112a to the bent portion 112b (see Fig. 4 to Fig. 6).

Moreover, the pipe cross-sectional area of the bend 112 remains constant from the upstream portion 112a to the bent portion 112b (the cross-sectional areas illustrated in Fig. 4, Fig. 5, and Fig. 6). Note that the pipe cross-sectional area refers to the pipe cross-sectional area along a plane perpendicular to the vertical cross-sectional plane and the horizontal cross-sectional plane, that is, the pipe cross-sectional area along a plane perpendicular to the direction of flow of the fluid flowing through the bend 112.

The cross-sectional shape of the downstream portion 112c is as Fig. 7, which is a shape obtained by bending the bent portion 112b, having the cross-sectional shape illustrated in Fig. 6, by 90° to make it face upward.

Thus, the pipe width of the bent portion 112b of the bend 112 in the vertical plane is d, which is narrow. Accordingly, as illustrated in Fig. 3, the difference between a flow speed V11 on an inner periphery side of the bend 112 and a flow speed V12 on an outer periphery side of the bend 112 is small, thereby reducing the occurrence of swirling and separation.

Meanwhile, in the conventional technique, the pipe width of the bent portion of the bend is D, which is large, as illustrated in Fig. 14. Thus, the difference between the flow speed V1 on the inner periphery side and the flow speed V2 on the outer periphery side is large, thereby increasing the occurrence of swirling and separation.

Also, the pipe cross-sectional area of the bend 112 remains constant from the upstream portion 112a to the bent portion 112b and further to the downstream portion 112c. Thus, the flow speed of the fluid flowing from the upstream portion 112a through the bent portion 112b to the downstream portion 112c remains constant from the upstream portion 112a through the bent portion 112b to the downstream portion 112c.

The cross-sectional shape of the inlet pipe 113 (see Fig. 8, which is a cross-sectional view taken along line VIII-VIII in Fig. 2) is the same as the cross-sectional shape of the downstream portion 112c of the bend 112 (see Fig. 7). Also, an axial length L1 of the inlet pipe 113 is L1 ≥ 3 × d, which is shorter than that in the conventional technique.

Note that L ≥ 3 × D in the conventional technique, and the axial length of the inlet pipe is long.

As described above, at the bend 112, the fluid flows at a constant speed and also the occurrence of swirling and separation decreases. The occurrence of the swirling and the like at the downstream portion 112c of the bend 112 is determined by the pipe width d. Then, with the axial length L1 of the inlet pipe 113 satisfying L1 ≥ 3 × d, it is possible to achieve a flow straightening effect equivalent to that achieved when L ≥ 3 × D as in the conventional technique.

As described above, it is possible to achieve a fluid flow straightening effect while also making the axial length L1 of the inlet pipe 113 shorter than that in the conventional technique. Accordingly, a disposition height H1 of the single-shaft multi-stage centrifugal compressor 3 (see Fig. 1) is lower than the disposition height H in the conventional technique (see Fig. 13). This makes it possible to achieve advantageous effects of achieving space-saving and also downsizing accompanying structural components. Also, since the fluid flow straightening effect is equivalent to that by the conventional technique, the performance of the compressor is not lowered.

In the above-described example, the pipe cross-sectional area remains constant from the upstream portion 112a to the bent portion 112b and further to the downstream portion 112c. Note, however, that the pipe cross-sectional area may gradually decrease from the upstream portion 112a to the bent portion 112b. In this case, the flow speed of the fluid flowing through the bend 112 is accelerated.

Also, in a case where the inlet pipe 113 is connected to the casing 3a such that h of the inlet pipe 113 (see Fig. 8) is oriented in the same direction as a radial width W of the casing 3a of the single-shaft multi-stage centrifugal compressor 3 (see Fig. 2), then, h ≤ W. In other words, the maximum value of the pipe width h of the inlet pipe 113 is W.

### EMBODIMENT 2

Next, further improved versions of the bend 112, employed in embodiment 1, will be described as embodiment 2.

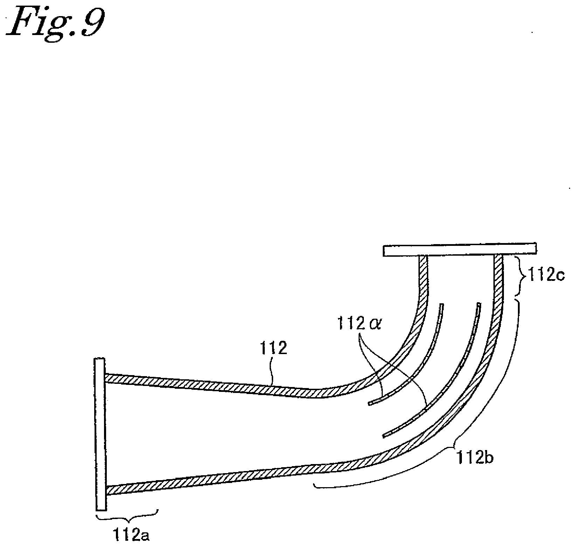

A bend 112 illustrated in Fig. 9 includes, inside the bent portion 112b, two bent plates (flow straightening member) 112α that straighten the flow of the fluid while guiding it. The bent plates 112α are plates extending along the direction of flow of the fluid flowing through the bend 112. Note that the number of bent plates 112α disposed is not limited to two.

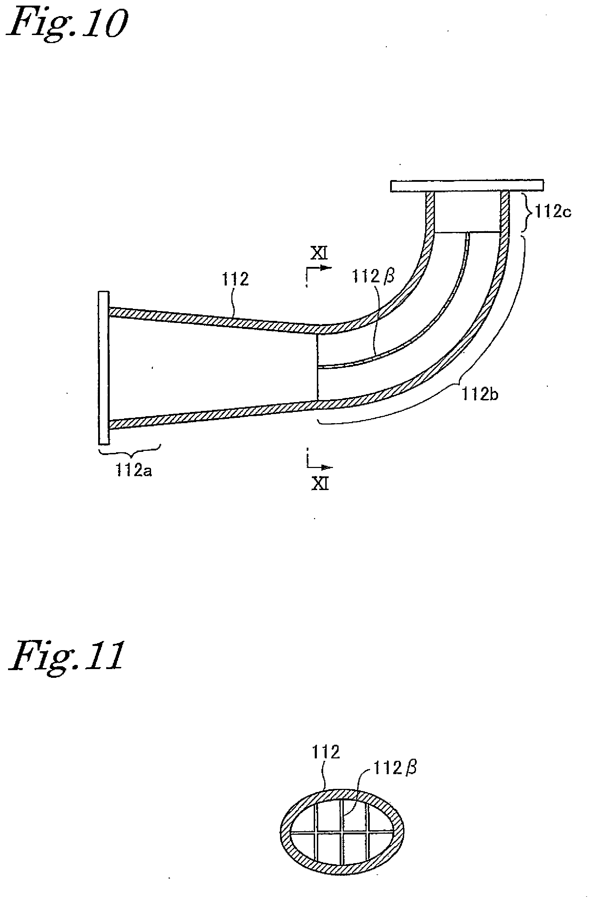

A bend 112 illustrated in Fig. 10 and Fig. 11, which is a cross section taken along line XI-XI in Fig. 10, includes, inside the bent portion 112b, a bent plate structure (flow straightening member) 112β that straightens the flow of the fluid while guiding it. This bent plate structure 112β extends along the direction of flow of the fluid flowing through the bend 112 and partitions the fluid channel from the upstream portion 112a to the bent portion 112b and further to the downstream portion 112c into a plurality of parallel flow channels (eight flow channels in this example).

By incorporating the bent plates 112α or the bent plate structure 112β inside the bend 112 as above, the occurrence of the swirling and separation can be reduced further. Since the occurrence of the swirling and the like can be thus reduced further, the axial length of the inlet pipe 113 can be shortened further.

The above-described embodiments are examples in which the supply pipe is disposed horizontally and the inlet pipe is disposed vertically. However, the present invention is also applicable to a pipe with a supply pipe and an inlet pipe both disposed horizontally and a bend connecting the supply pipe and the inlet pipe.

In this case, the bend is shaped such that:
(1) the pipe width in the horizontal cross-sectional plane gradually decreases from the upstream portion to the bent portion; and
(2) the pipe width in the vertical cross-sectional plane gradually increases from the upstream portion to the bent portion.

Furthermore, in the present invention, the pipe cross-sectional area preferably remains constant from the upstream portion to the bent portion.

### INDUSTRIAL APPLICABILITY

The present invention is applicable to pipes that supply fluids to driven-type fluid machines such as a pump and an air blower as well as a compressor, which convert mechanical work into fluid-dynamic energy.

### REFERENCE SIGNS LIST

- 1: base (ground)
- 2: mount
- 3: single-shaft multi-stage centrifugal compressor
- 3a: casing
- 3b: suction port
- 11, 111: supply pipe
- 12, 112: bend (bent pipe)
- 112a: upstream portion
- 112b: bent portion
- 112c: downstream portion
- 112α: bent plate
- 112β: bent plate structure
- 13, 113: inlet pipe

## Claims

1. A pipe for a driven-type fluid machine (3), the pipe including an inlet pipe (113) that is to be connected to a suction port (3b) provided in a casing (3a) of the driven-type fluid machine (3), a supply pipe (111) that supplies a fluid, and a bend (112) that connects the supply pipe (111) and the inlet pipe (113) to each other,
the bend (112) comprising an upstream portion (112a) and a bent portion (112b) and being shaped such that a pipe width in a plane including a pipe axis of the inlet pipe (113) and a pipe axis of the supply pipe (111) gradually decreases from the upstream portion (112a) to the bent portion (112b),
and L1 ≥ 3 × d is satisfied, where d is the pipe width at the bent portion (112b) and L1 is an axial length of the inlet pipe (113), **characterized in that** the bend (112) is shaped such that a pipe width in a plane being perpendicular to the plane including the pipe axis of the inlet pipe (113) and the pipe axis of the supply pipe (111) and including the pipe axis of the inlet pipe (113) gradually increases from the upstream portion (112a) to the bent portion (112b).

2. The pipe for a driven-type fluid machine according to claim 1, **characterized in that** a pipe cross-sectional area of the bend (112) remains constant from the upstream portion (112a) to the bent portion (112b).

3. The pipe for a driven-type fluid machine according to any one of claims 1 or 2, **characterized in that** inside the bend (112), a plate-shaped flow straightening member (112α) is disposed which is disposed along a direction of flow of the fluid to guide the fluid.

4. A driven-type fluid machine comprising a pipe according to any one of claims 1 to 3, **characterized in that**
the driven-type fluid machine is a single-shaft multi-stage centrifugal compressor (3),
the inlet pipe is disposed vertically, and
the supply pipe is disposed horizontally.

## Patentansprüche

1. Rohrsystem für eine angetriebene Fluidmaschine (3), wobei das Rohrsystem aufweist:
ein Einlassrohr (113) zum Anschluss an einer Ansaugöffnung (3b), die in einem Gehäuse (3a) der angetriebenen Fluidmaschine (3) vorgesehen ist, ein Zuführrohr (111), das ein Fluid zuführt und ein Bogenstück (112), welches das Zuführrohr (111) und das Einlassrohr (113) miteinander verbindet, wobei
das Bogenstück (112) einen stromaufwärtigen Abschnitt (112a) und einen gebogenen Abschnitt (112b) umfasst und derart geformt ist, dass eine Rohrweite in einer Ebene, einschließend eine Rohrachse des Einlassrohrs (113) und eine Rohrachse des Zuführrohrs (111) von dem stromaufwärtigen Abschnitt (112a) zu dem gebogenen Abschnitt (112b) graduell abnimmt und L1 ≥ 3 x d genügt ist, wobei d die Rohrweite an dem gebogenen Abschnitt (112b) und L1 eine axiale Länge des Einlassrohres (113) ist, **dadurch gekennzeichnet, dass** das Bogenstück (112) derart geformt ist, dass eine Rohrweite in einer Ebene, die senkrecht zu der Ebene, einschließend die Rohrachse des Einlassrohres (113) und die Rohrachse des Zuführrohrs (111) und einschließend die Rohrachse des Einlassrohres (113) graduell zunimmt von dem stromaufwärtigen Abschnitt (112a) zu dem gebogenen Abschnitt (112b).

2. Rohrsystem für eine angetriebene Fluidmaschine nach Anspruch 1, **dadurch gekennzeichnet, dass** eine Rohr-Querschnittsfläche des Biegestücks (112) von dem stromaufwärtigen Abschnitt (112a) zu dem gebogenen Abschnitt (112b) konstant bleibt.

3. Rohrsystem für eine angetriebene Fluidmaschine nach einem der Ansprüche 1 oder 2, **dadurch gekennzeichnet, dass** im Inneren des Biegestücks (112) ein plattenförmiges Strömungsausricht-Element (112α) angeordnet ist, das entlang einer Strömungsrichtung des Fluids angeordnet ist, um das Fluid zu führen.

4. Angetriebene Fluidmaschine, umfassend ein Rohrsystem nach einem der Ansprüche 1 bis 3, **dadurch gekennzeichnet, dass** die angetriebene Fluidmaschine ein Einwellen-Mehrstufen-Zentrifugalkompressor (3) ist,
das Einlassrohr vertikal angeordnet ist und
das Zuführrohr horizontal angeordnet ist.

## Revendications

1. Tuyau pour machine à fluide du type entraîné (3), le tuyau comprenant un tuyau d'entrée (113) qui doit être raccordé à un orifice d'aspiration (3b) ménagé dans un boîtier (3a) de la machine à fluide du type entraîné (3), un tuyau d'alimentation (111) qui distribue un fluide, et un coude (112) qui raccorde le tuyau d'alimentation (111) et le tuyau d'entrée (113) l'un à l'autre,
le coude (112) comprenant une partie d'amont (112a) et une partie coudée (112b) et étant conformé de manière qu'une largeur de tuyau dans un plan incluant un axe de tuyau du tuyau d'entrée (113) et un axe de tuyau du tuyau d'alimentation (111) aille en diminuant progressivement de la partie d'amont (112a) à la partie coudée (112b),
et L1 ≥ 3 x d soit satisfaite, où d est la largeur de tuyau au niveau de la partie coudée (112b) et L1 est une longueur axiale du tuyau d'entrée (113), **caractérisé en ce que** le coude (112) est conformé de manière qu'une largeur de tuyau dans un plan étant perpendiculaire au plan incluant l'axe de tuyau du tuyau d'entrée (113) et incluant l'axe de tuyau du tuyau d'alimentation (111) aille en augmentant progressivement de la partie d'amont (112a) à la partie coudée (112b).

2. Tuyau pour machine à fluide du type entraîné selon la revendication 1, **caractérisé en ce qu'**une section transversale du coude (112) reste constante de la partie d'amont (112a) à la partie coudée (112b).

3. Tuyau pour machine à fluide du type entraîné selon l'une quelconque des revendications 1 ou 2, **caractérisé en ce que**, à l'intérieur du coude (112), un organe de redressement d'écoulement en forme de plaque (112α) est disposé le long d'une direction d'écoulement du fluide afin de guider le fluide.

4. Machine à fluide du type entraîné comprenant un tuyau selon l'une quelconque des revendications 1 à 3, **caractérisée en ce que**
la machine à fluide du type entraîné est un compresseur centrifuge multi-étages à arbre unique (3),
le tuyau d'entrée est disposé verticalement, et
le tuyau d'alimentation est disposé horizontalement.
